# EUROPEAN PATENT APPLICATION

(11) **EP 4 564 758 A1**
(43) Date of publication of application: **04.06.2025**
(21) Application number: 22954455.6
(22) Date of filing: 10.08.2022
(51) Int. Cl.: H04L 27/00

(54) **MEASUREMENT METHOD, CAPABILITY REPORT METHOD, MEASUREMENT CONFIGURATION METHODS, APPARATUSES AND DEVICE**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); HU, Rongyi, Dongguan, Guangdong 523860 (CN)
(74) Representative: RGTH
(86) International application number: PCT/CN2022/111580
(87) International publication number: WO 2024/031483

(57) **Abstract**

The present application discloses a measurement method, a capability reporting method, a measurement configuration method, an apparatus and a device, and belongs to the field of mobile communications. The method includes: performing measurement via multiple receive beams simultaneously (202). The multiple receive beams may be used to simultaneously measure a reference signal corresponding to an L1 measurement or a reference signal corresponding to an L3 measurement, or the multiple receive beams may be used to simultaneously measure reference signals corresponding to the L1 measurement and the L3 measurement, thereby reducing measurement time to a certain extent.

## Description

### TECHNICAL FIELD

The present application relates to the field of mobile communications, and in particular, to a measurement method, a capability reporting method, a measurement configuration method, an apparatus and a device.

### BACKGROUND

In standardization of the 5th generation (5G) mobile communication technology of the 3rd generation partnership project (3GPP), it is necessary to ensure mobility measurement.

In the related art, in a case of performing measurement in a high-frequency band, a user equipment (UE) needs to traverse all beam directions to obtain a final measurement result, and measurement in each beam direction takes a lot of time. For example, the UE may need to scan up to 8 receive beams during the measurement process. In this case, how to reduce measurement time is an urgent problem to be solved.

### SUMMARY

Embodiments of the present application provide a measurement method, a capability reporting method, a measurement configuration method, an apparatus and a device. In a case where the UE has a capability to simultaneously use multiple receive beams, the measurement time may be reduced to a certain extent by using the multiple receive beams for the same measurement type or for different measurement types simultaneously. The technical solutions are as follows.

According to an aspect of the embodiments of the present application, a measurement method is provided, and the method is performed by a terminal. The method includes:
performing measurement via at least two receive beams simultaneously.

According to an aspect of the embodiments of the present application, a capability reporting method is provided, and the method is performed by a terminal. The method includes:
reporting capability information, where the capability information is used for indicating whether the terminal supports a capability for simultaneous reception on a same carrier via multiple receive beams.

According to an aspect of the embodiments of the present application, a capability receiving method is provided, and the method is performed by a terminal. The method includes:
receiving capability information reported by a terminal, where the capability information is used for indicating whether the terminal supports a capability for simultaneous reception on a same carrier via multiple receive beams.

According to an aspect of the embodiments of the present application, a measurement configuration method is provided, and the method is performed by a network device. The method includes:
transmitting configuration information to a terminal, where the configuration information is used for configuring the terminal to allow simultaneous measurement on a same carrier via multiple receive beams.

According to an aspect of the embodiments of the present application, a measurement configuration method is provided, and the method is performed by a network device. The method includes:
receiving configuration information transmitted by a network device, where the configuration information is used for configuring the terminal to allow simultaneous measurement on a same carrier via multiple receive beams.

According to another aspect of the embodiments of the present application, a measurement apparatus is provided, and the apparatus includes:
a measuring module, configured to perform measurement via at least two receive beams simultaneously.

According to an aspect of the embodiments of the present application, a capability reporting apparatus is provided, and the apparatus includes:
a first transmitting module, configured to report capability information, where the capability information is used for indicating whether the terminal supports a capability for simultaneous reception on a same carrier via multiple receive beams.

According to an aspect of the embodiments of the present application, a capability receiving apparatus is provided, and the apparatus includes:
a first receiving module, configured to receive capability information reported by a terminal, where the capability information is used for indicating whether the terminal supports a capability for simultaneous reception on a same carrier via multiple receive beams.

According to an aspect of the embodiments of the present application, a measurement configuration apparatus is provided, and the apparatus includes:
a second transmitting module, configured to transmit configuration information to a terminal, where the configuration information is used for configuring the terminal to allow simultaneous measurement on a same carrier via multiple receive beams.

According to an aspect of the embodiments of the present application, a measurement configuration apparatus is provided, and the apparatus includes:
a second receiving module, configured to receive configuration information, where the configuration information is used for configuring the apparatus to allow simultaneous measurement on a same carrier via multiple receive beams.

According to another aspect of the embodiments of the present application, a terminal is provided, and the terminal includes:
a processor; and
a transceiver connected to the processor;
where the processor is configured to execute executable instructions to implement at least one of the measurement method, the capability reporting method, or a terminal side step of the measurement configuration method as described in the above aspects.

According to another aspect of the embodiments of the present application, a network device is provided, and the network device includes:
a processor; and
a transceiver connected to the processor;
where the processor is configured to execute executable instructions to implement at least one of the measurement method, the capability receiving method, or a network device side step of the measurement configuration method as described in the above aspects.

According to another aspect of the embodiments of the present application, a computer-readable storage medium is provided. The computer-readable storage medium has stored computer instructions therein, and the computer instructions are loaded and executed by a processor to implement at least one of the measurement method, the capability reporting method, the capability receiving method, or the measurement configuration method as described in the above aspects.

According to another aspect of the embodiments of the present application, a computer program product or a computer program is provided. The computer program product or the computer program includes computer instructions, and the computer instructions are stored in a computer-readable storage medium; a processor of a computer device reads the computer instructions from the computer-readable storage medium, and the processor executes the computer instructions to enable the computer device to perform at least one of the measurement method, the capability reporting method, the capability receiving method, or the measurement configuration method as described in the above aspects.

According to another aspect of the embodiments of the present application, a chip is provided. The chip includes a programmable logic circuit and/or program instructions, and a communication device equipped with the chip operates to implement at least one of the measurement method, the capability reporting method, the capability receiving method, or the measurement configuration method as described in the above aspects.

The technical solutions provided in the embodiments of the present application may have the following beneficial effects:
the terminal performs the measurement via multiple receive beams simultaneously, and the multiple receive beams may be used to simultaneously measure a reference signal corresponding to an L1 measurement or a reference signal corresponding to an L3 measurement, or the multiple receive beams may be used to simultaneously measure reference signals corresponding to the L1 measurement and the L3 measurement, thereby reducing measurement time to a certain extent.

### BRIEF DESCRIPTION OF THE DRAWINGS

In order to describe technical solutions in the embodiments of the present application more clearly, the accompanying drawings to be used in the description of the embodiments will be introduced briefly below. Obviously, the accompanying drawings to be described below are merely accompanying drawings of some embodiments of the present disclosure, and a person of ordinary skill in the art can obtain other drawings according to these drawings without paying creative efforts.
FIG. 1 is a schematic diagram of a communication system provided according to an exemplary embodiment;
FIG. 2 is a flow chart of a measurement method provided according to an exemplary embodiment;
FIG. 3 is a flow chart of a measurement method provided according to an exemplary embodiment;
FIG. 4 is a schematic diagram of beam measurement provided according to an exemplary embodiment;
FIG. 5 is a flow chart of a measurement method provided according to an exemplary embodiment;
FIG. 6 is a schematic diagram of beam measurement provided according to an exemplary embodiment;
FIG. 7 is a flow chart of a measurement method provided according to an exemplary embodiment;
FIG. 8 is a schematic diagram of beam measurement provided according to an exemplary embodiment;
FIG. 9 is a schematic diagram of a capability reporting method provided according to an exemplary embodiment;
FIG. 10 is a schematic diagram of a measurement configuration method provided according to an exemplary embodiment;
FIG. 11 is a block diagram of a measurement apparatus according to an exemplary embodiment;
FIG. 12 is a block diagram of a capability reporting apparatus provided according to an exemplary embodiment;
FIG. 13 is a block diagram of a capability receiving apparatus provided according to an exemplary embodiment;
FIG. 14 is a block diagram of a measurement configuration apparatus provided according to an exemplary embodiment;
FIG. 15 is a block diagram of a measurement configuration apparatus provided according to an exemplary embodiment;
FIG. 16 is a schematic diagram of a structure of a terminal provided according to an exemplary embodiment; and
FIG. 17 is a schematic diagram of a structure of a network device or an access network device provided according to an exemplary embodiment.

### DETAILED DESCRIPTION

Exemplary embodiments will be described in detail here, examples of which are illustrated in the accompanying drawings. When the drawings are involved in the following description, unless otherwise indicated, the same number in different accompanying drawings represents the same or similar elements. The implementations described in the following exemplary embodiments do not represent all implementations consistent with the present application. On the contrary, they are merely examples of apparatuses and methods consistent with some aspects of the present application as described in the appended claims. In the description of the present application, unless otherwise specified, "/" means "or". For example, A/B can mean A or B. Herein, the term "and/or" is only an association relationship for describing associated objects, which indicates that three relationships may exist. For example, A and/or B may indicate three situations that: A exists alone, both A and B exist, and B exists alone.

The terms used in the present application are for the purpose of describing particular embodiments only and are not intended to limit the present application. The singular forms "a", "an", and "the" used in the present application and the appended claims are intended to include the plural form, unless the context clearly indicates otherwise. It should also be understood that the term "and/or" used herein refers to and includes any or all possible combinations of one or more of the associated listed items.

It should be understood that, although the terms "first", "second", "third", and the like may be used in the present application to describe various information, the information should not be limited to these terms. These terms are used only to distinguish information of the same type from one another. For example, without departing from the scope of the present application, first information may also be referred to as second information, and similarly, second information may also be referred to as first information. Depending on the context, for example, the word "if' used herein may be interpreted as "in a case of", "when" or "in response to determining".

First, several technical points involved in the present application are introduced briefly.

### Layer 1 (L1) measurement

L1 refers to a physical layer (PHY). Illustratively, a type of L1 measurement includes at least one:
a radio link monitoring (RLM);
a candidate beam detection (CBD);
a beam failure detection (BFD);
a layer 1 reference signal received power (L1-RSRP); or
a layer 1 signal-to-interference-and-noise ratio (L1-SINR).

The L1 measurement can be based on a synchronization signal and physical broadcast channel (PBCH) block (SSB) or a channel state information reference signal (CSI-RS) resource.

L1 measurement time in a traditional terrestrial network (TN) is based on the following three basic assumptions:
1) the L1 measurement should be kept outside a measurement gap (MG) as much as possible;
2) a frequency range 1 (FR1) band supports simultaneous measurement of L1 and L3;
   where the FR1 band refers to a frequency band below 6 GHz, e.g., in a range of 450 MHz to 6 GHz; and a FR2 band refers to a frequency band in a range of 24 GHz to 52 GHz, which is also known as the millimeter wave frequency band.
3) FR2 frequency points do not support the simultaneous measurement of L1 and L3 (UE may need different receive beams for L1 and L3).

These three points can be reflected in calculation of a scaling factor P. In the relevant technologies, the L1 measurement based on the CSI-RS signal and the L1 measurement based on the SSB signal are similar in the calculation of the scaling factor P. In addition, the L1 measurement for FR2 further involves a scheduling restriction. For example, an RLM reference signal is CSI-RS, a transmission configuration indicator (TCI) state of a physical downlink control channel (PDCCH)/physical downlink shared channel (PDCCH) currently activated is quasi-co-location type D (QCL type D), and CSI-RS resources are repeated; and in this case, there is no need for the scheduling restriction. Otherwise, the UE cannot transmit or receive data on symbols where the RLM reference signal is located.

### Layer 3 (L3) measurement

L3 refers to a radio resource control (RRC) layer.

The L3 measurement is mainly used for mobility management. The L3 measurement can be divided into SSB-based and CSI-RS-based according to types of reference signals, and can be divided into intra-frequency and inter-frequency measurement according to frequency point /bandwidth configuration of the reference signals.

By taking the intra-frequency SSB measurement as an example, it will be further divided into whether measurement within the MG is needed based on the UE capability and SSB configuration information. The SSB-based L3 measurement is mainly performed through a SSB measurement timing configuration (SMTC) window, and the measurement time takes an SMTC period into consideration. There is currently no measurement window configured for the CSI-RS-based L3 measurement, and the measurement time is directly calculated based on a CSI-RS signal period. Correspondingly, the L3 measurement without using the MG also has the scheduling restriction, and the L3 measurement requiring the MG has no scheduling restrictions.

The Rel-15 version of the protocol sets indicators based on the most basic UE capabilities, i.e., a single antenna panel and a single receive beam/chain. In the carrier aggregation (CA) scenario of Rel-16, the UE receiving capability is enhanced to support simultaneous reception of downlink signals on different carriers in a form of independent beam management (IBM). The IBM capability requires the UE to have multiple basebands and RF processing capability, and to be able to use different receive beams on different carriers to simultaneously receive multiple downlink signals using different UE panels/chains. In addition, in the Rel-16 eMIMO enhancement, the capability to simultaneously receive using multiple receive beams (simultaneousReceptionDiffTypeD-r16, which can be supported on the same carrier) is also introduced. For the corresponding UE capability in the 3GPP protocol, the UE only reports whether simultaneous reception of two QCL type-D types is supported.

It can be known from the relevant technologies that the time of the L1 measurement and L3 measurement basically depends on the corresponding UE capability. Herein, the L1 measurement may be considered as an abbreviation of an L1 measurement process, and the L3 measurement may also be considered as an abbreviation of an L3 measurement process.

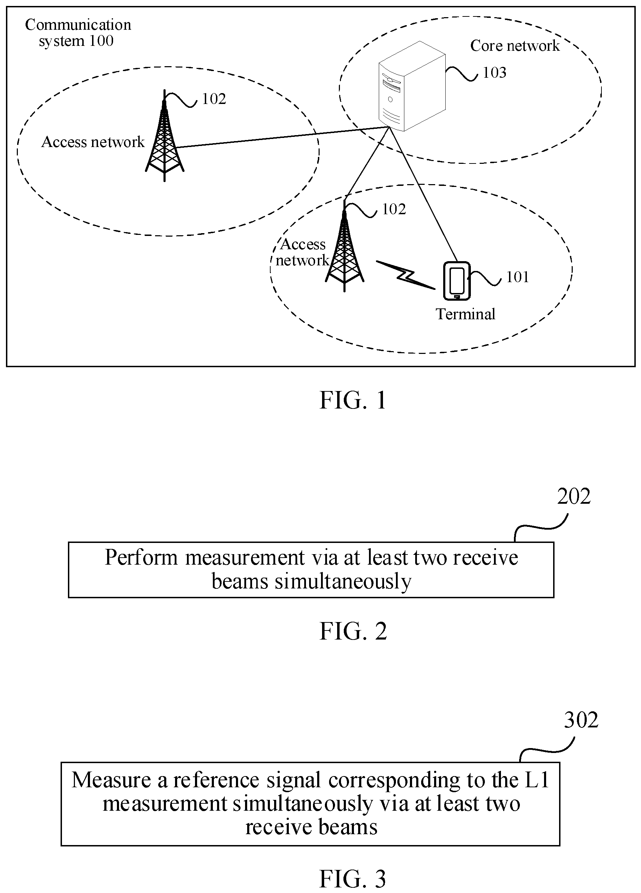

FIG. 1 is a schematic diagram of a communication system provided by an exemplary embodiment of the present application. The communication system 100 may include: terminals 101, access network device(s) 102 and a core network device 103.

The number of terminals 101 is usually multiple, and one or more terminals 101 may be distributed in a cell managed by each access network device 102. The terminals 101 may include a variety of handheld devices, in-vehicle devices, wearable devices, computing devices or other processing devices connected to wireless modems, which have a wireless communication function, as well as various forms of user equipments (UEs), mobile stations (MSs), or the like. For the convenience of description, in the embodiments of the present application, the above-mentioned devices are collectively referred to as terminals.

The access network device 102 is an apparatus deployed in the access network and used for providing the wireless communication function for the terminal 101. The access network devices 102 may include various forms of macro base stations, micro base stations, relay stations, and access points. In systems using different wireless access technologies, the names of devices with access network device functions may be different. For example, in the 5th generation (5G) mobile communication technology NR system, the devices with access network device functions are referred to as gNodeB or gNB. As the communication technology evolves, the name "access network device" may change. For the convenience of description, in the embodiments of the present application, the above-mentioned apparatuses that provide the wireless communication function for the terminal 101 are collectively referred to as access network devices. The access network device 102 and the terminal 101 may establish a connection via an air interface, thereby performing communication (including the interaction of signaling and data) via the connection. There may be multiple access network devices 102, and two adjacent access network devices 102 may communicate with each other via a wired or wireless mean. The terminal 101 can switch between different access network devices 102, i.e., establish connections with different access network devices 102. In the following, the description is made by taking an example where the access network device 102 is a base station.

The functions of the core network device 103 are mainly to provide user connection, user management and service bearing, and to provide an interface to an external network as a bearer network. The access network device 102 and the core network device 103 may be collectively referred to as network devices. For example, the network device in the embodiments of the present application may refer to the access network device. The core network device 103 and the access network device 102 communicate with each other via some air technology, and a communication relationship can be established between the terminal 101 and the core network device 103 via the access network device 102. For example, the core network device in the embodiments of the present application refers to LMF.

The "5G NR system" in the embodiments of the present application may also be referred to as a 5G system or an NR system, and those skilled in the art may understand its meaning. The technical solutions described in the embodiments of the present application may be applied to the 5G NR system, or may be applied to a subsequent evolution system of the 5G NR system.

FIG. 2 illustrates a flow chart of a measurement method provided by an exemplary embodiment of the present application. This embodiment is described by taking an example where the method is performed by a terminal. The method includes:
step 202, performing measurement via at least two receive beams simultaneously.

This measurement is radio resource management (RRM) measurement. The measurement includes L1 measurement and/or L3 measurement. The terminal supports simultaneous measurement and/or data transmission of multiple receive beams.

In some embodiments, the terminal measures a reference signal corresponding to the L1 measurement simultaneously via at least two receive beams. The reference signal corresponding to the L1 measurement include at least one of SSB or CSI-RS.

In some embodiments, the terminal measures a reference signal corresponding to the L3 measurement simultaneously via at least two receive beams. The reference signal corresponding to the L3 measurement include at least one of SSB, CSI-RS, or a positioning reference signal (PRS).

In some embodiments, the terminal measures a reference signal corresponding to the L1 measurement and a reference signal corresponding to the L3 measurement simultaneously via at least two receive beams.

In summary, in the method provided in this embodiment, the terminal performs the measurement via multiple receive beams simultaneously, so that the multiple receive beams may be used to simultaneously measure a reference signal corresponding to the L1 measurement or L3 measurement, or the multiple receive beams may be used to simultaneously measure reference signals corresponding to the L1 measurement and the L3 measurement, thereby reducing measurement time to a certain extent.

FIG. 3 illustrates a flow chart of a measurement method provided by an exemplary embodiment of the present application. This embodiment is described by taking an example where the method is performed by a terminal. The method includes:
step 302, measuring a reference signal corresponding to the L1 measurement simultaneously via at least two receive beams.

The terminal measures the reference signal corresponding to the L1 measurement simultaneously via the at least two receive beams. The reference signal corresponding to the L1 measurement include at least one of SSB or CSI-RS.

For example, as shown in FIG. 3, the base station 102 transmits a reference signal of the L1 measurement to the terminal 101. In a case where the terminal 101 is capable of simultaneously using at least two receive beams for performing simultaneous measurement, the terminal 101 can measure the reference signal corresponding to the L1 measurement simultaneously. In FIG. 3, it is assumed that the terminal uses N_{sim_Rx_beam_for_meas} = 3 receive beams to simultaneously measure the reference signal corresponding to the L1 measurement.

In some embodiments, the terminal determines that a first parameter is reduced from a first value to one fraction of N_{sim_Rx_beam_for_meas} of the first value. The first parameter is a scaling factor related to receive beam sweeping, N_{sim_Rx_beam_for_meas} is the number of receive beams for the simultaneous measurement of the at least two receive beams, and the value of N_{sim_Rx_beam_for_meas} is a positive integer.

Here, the first value is a value of the first parameter defined in the existing protocol, e.g., the value defined for the first parameter by 3GPP R15, R16, or R17. Optionally, the first value is a value taken in a case where the terminal uses a single receive beam to measure the reference signal corresponding to the L1 measurement. Optionally, the first value is a value defined for the first parameter in the 3GPP standard protocol before the filing date of this case.

In some embodiments, the first parameter includes at least one of:
a parameter N related to the receive beam sweeping (Rx beam sweeping) in the L1 measurement.

Optionally, the first value of the parameter N refers to relevant records of the L1 measurement in Chapters 8 and 9 of the 3GPP TS38.133 protocol, for example, the parameter N in Chapter 8.1 for determining the RLM measurement time.

In a scenario where the terminal measures the reference signal corresponding to the L1 measurement simultaneously via at least two receive beams, in order to reduce the measurement time, a more intuitive way is to reduce the scaling factor related to the Rx beam sweeping.

For example, the first parameter includes the parameter N related to the Rx beam sweeping during the L1 measurement process, where N is a scaling factor for the Rx beam sweeping, and is only available in FR2. The value of N is generally 8. For a scenario of the FR2 high speed train (HST), the value of N depends on the network deployment, and is 6 or 2.

For example, for a parameter N1 related to the Rx beam sweeping used in a process of cell selection or cell reselection in an RRC idle state, and a parameter N1 related to the Rx beam sweeping used in a process of cell selection or cell reselection in an RRC inactive state, N1 = {8, 5, 4, 3}. In a case where the UE is capable of simultaneously using N_{sim_Rx_beam_for_meas} receive beams for receiving a downlink signal, parameters such as N, M, N1 are reduced from the first value to one fraction of N_{sim_Rx_beam_for_meas} of the first value, where N_{sim_Rx_beam_for_meas} is the number of receive beams for the simultaneous measurement of the at least two receive beams.

In some embodiments, the L1 measurement process includes at least one of the RLM, BFD, CBD, L1-RSRP, or L1-SINR.

In some embodiments, the value of N_{sim_Rx_beam_for_meas} is a positive integer, and N_{sim_Rx_beam_for_meas} is related to the UE capability and/or network indication signaling.

In summary, in the method provided in this embodiment, the terminal measures the reference signal corresponding to the L1 measurement simultaneously via multiple receive beams, and determines that the first parameter is one fraction of N_{sim_Rx_beam_for_meas} of the first value, so that the measurement time may be reduced to a certain extent. For example, in a case where three receive beams are used for the simultaneous measurement, the measurement time may be reduced by nearly 2/3 compared with a case where each beam direction is measured separately.

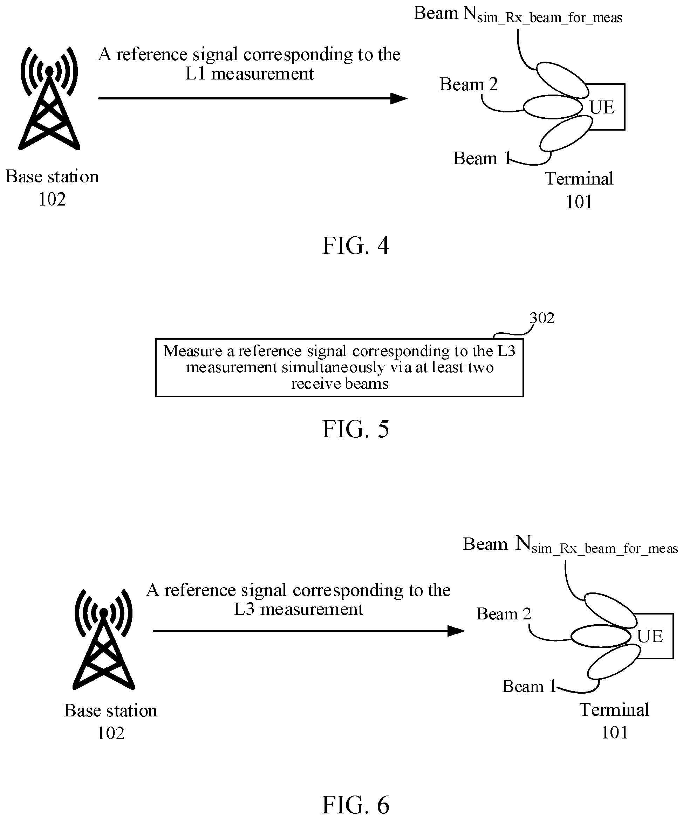

FIG. 5 illustrates a flow chart of a measurement method provided by an exemplary embodiment of the present application. This embodiment is described by taking an example where the method is performed by a terminal. The method includes:
step 402, measuring a reference signal corresponding to the L3 measurement simultaneously via at least two receive beams.

The terminal measures the reference signal corresponding to the L3 measurement simultaneously via at least two receive beams. The reference signal corresponding to the L3 measurement includes: at least one of SSB, CSI-RS, or PRS.

For example, as shown in FIG. 6, the base station 102 transmits a reference signal of the L3 measurement to the terminal 101. In a case where the terminal 101 is capable of simultaneously using at least two receive beams for performing simultaneous measurement, the terminal 101 can measure the reference signal corresponding to the L3 measurement simultaneously. In FIG. 6, it is assumed that the terminal uses N_{sim_Rx_beam_for_mea} = 3 receive beams to simultaneously measure the reference signal corresponding to the L3 measurement.

In some embodiments, the terminal determines that a first parameter is reduced from a first value to one fraction of N_{sim_Rx_beam_for_meas} of the first value. The first parameter is a scaling factor related to receive beam sweeping, N_{sim_Rx_beam_for_meas} is the number of receive beams for the simultaneous measurement of the at least two receive beams, and the value of N_{sim_Rx_beam_for_meas} is a positive integer.

Here, the first value is a value of the first parameter defined in the existing protocol, e.g., the value defined for the first parameter by 3GPP R15, R16, or R17. Optionally, the first value is a value taken in a case where the terminal uses a single receive beam to measure the reference signal corresponding to the L3 measurement.

In some embodiments, the first parameter includes at least one of:
a parameter M related to the Rx beam sweeping in the L3 measurement;
where the parameter M includes multiple parameters, for example, M_{pss/sss_sync_w/o_gaps}, M_{meas_period _w/o_gaps}, etc. (for example, the relevant definition of the parameter M may refer to at least one of Tables 9.2.5.1-2, 9.2.5.1-5, 9.2.5.1-8, 9.2.5.2-2, 9.2.5.2-4, or 9.2.5.2-7 in Chapter 9.2 of the 3GPP TS38.133 protocol);
a Rx beam sweeping factor N_{RxBeam} in positioning measurement;
where the relevant definition of the parameter N_{RxBeam} may refer to relevant records in Chapters 5.6 and 9.9 of the 3GPP TS38.133 protocol;
a parameter N1 related to the Rx beam sweeping used in a process of cell selection or cell reselection in an RRC idle state; or
a parameter N1 related to the Rx beam sweeping used in a process of cell selection or cell reselection in an RRC inactive state.

The relevant definition of the parameter N1 may refer to relevant records in Chapter 4 of the 3GPP TS38.133 protocol.

In a scenario where the terminal measures the reference signal corresponding to the L3 measurement simultaneously via at least two receive beams, in order to reduce the measurement time, a more intuitive way is to reduce the scaling factor related to the Rx beam sweeping.

For example, the first parameter includes the parameter N related to the Rx beam sweeping during the L3 measurement process, where N is a scaling factor for the Rx beam sweeping, and is only available in FR2. The value of N is generally 8. For a scenario of the FR2 high speed train (HST), the value of N depends on the network deployment, and is 6 or 2.

For example, for the parameter N1 related to the Rx beam sweeping used in a process of cell selection or cell reselection in the RRC idle state, and the parameter N1 related to the Rx beam sweeping used in a process of cell selection or cell reselection in the RRC inactive state, N1 = {8, 5, 4, 3}. In a case where the UE is capable of simultaneously using N_{sim_Rx_beam_for_meas} receive beams for receiving a downlink signal, parameters such as N, M, N1 are reduced from the first value to one fraction of N_{sim_Rx_beam_for_meas} of the first value, where N_{sim_Rx_beam_for_meas} is the number of receive beams for the simultaneous measurement of the at least two receive beams.

In some embodiments, the L3 measurement process includes at least one of measurement within a measurement gap (MG), measurement within a network controlled small gap (NCSG), measurement outside a gap, deactivated secondary cell measurement, RRC idle state measurement, or RRC inactive state measurement.

In some embodiments, the value of N_{sim_Rx_beam_for_meas} is a positive integer, and N_{sim_Rx_beam_for_meas} is related to the UE capability and/or network indication signaling.

In summary, in the method provided in this embodiment, the terminal measures the reference signal corresponding to the L3 measurement simultaneously via multiple receive beams, and determines that the first parameter is one fraction of N_{sim_Rx_beam_for_meas} of the first value, so that the measurement time may be reduced to a certain extent. For example, in a case where three receive beams are used for the simultaneous measurement, the measurement time may be reduced by nearly 2/3 compared with a case where each beam direction is measured separately.

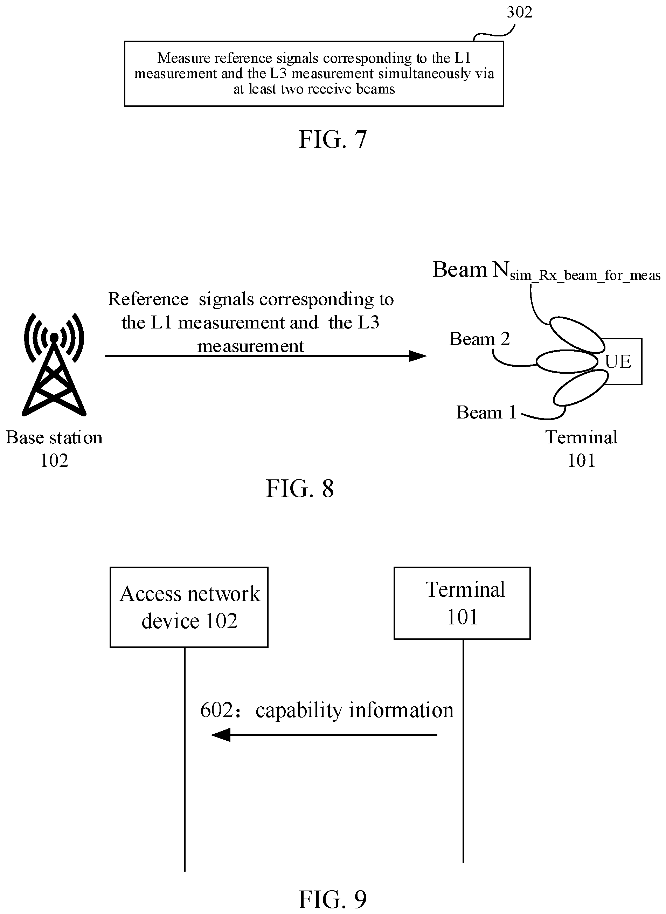

FIG. 7 illustrates a flow chart of a measurement method provided by an exemplary embodiment of the present application. This embodiment is described by taking an example where the method is performed by a terminal. The method includes:
step 502, measuring reference signals corresponding to the L1 measurement and the L3 measurement simultaneously via at least two receive beams.

The terminal measures reference signals corresponding to the L1 measurement and the L3 measurement simultaneously via at least two receive beams. The reference signals corresponding to the L1 measurement and the L3 measurement include at least one of SSB, CSI-RS, or PRS.

For example, as shown in FIG. 8, the base station 102 transmits reference signals of the L1 measurement and the L3 measurement to the terminal 101. In a case where the terminal 101 is capable of simultaneously using at least two receive beams for performing simultaneous measurement, the terminal 101 can measure the reference signals corresponding to the L1 measurement and the L3 measurement simultaneously.

For example, the above-mentioned simultaneous measurement means that the terminal 101 uses a first receive beam in the at least two receive beams to measure the reference signal of the L1 measurement, and simultaneously uses a second receive beam in the at least two receive beams to measure the reference signal of the L3 measurement. There is at least one first receive beam, there is at least one second receive beam, and a sum of numbers of the first receive beam(s) and the second receive beam(s) is N_{sim_Rx_beam_for_meas}. For example, the terminal 101 uses receive beam 1 to measure the reference signal of the L1 measurement, and simultaneously uses receive beam 2 and receive beam 3 to measure the reference signal of the L3 measurement.

In some embodiments, the terminal further determines a second parameter corresponding to the measurement of the at least two receive beams, and the second parameter corresponding to the measurement of the at least two receive beams is less than a second parameter corresponding to the measurement of a single receive beam. The second parameter is a scaling factor related to conflict between the L1 measurement and the L3 measurement.

In some embodiments, the second parameter includes at least one of:
a scaling factor P for the L1 measurement process;
where the relevant definition of the parameter P may refer to relevant records in Chapters 8 and 9 of the 3GPP TS38.133 protocol (for example, the parameter P in Chapter 8.1 is used to determine the RLM measurement time); or
a scaling factor K_{layer1_measurement} for the L3 measurement process;
where the relevant definition of the parameter K_{layer1_measurement} may refer to relevant records in Chapter 9 of the 3GPP TS38.133 protocol (for example, the parameter K_{layer1_measurement} in Chapter 9.2.5 is used to determine the FR2 intra-frequency SSB measurement time).

In a case where the UE is capable of simultaneously using at least two receive beams for performing simultaneous measurement, the reference signal corresponding to the L1 measurement and the reference signal corresponding to the L3 measurement can be measured simultaneously. The scaling factor(s) related to the conflict between L1 and L3, which include the scaling factor P in the L1 measurement process and/or the scaling factor K_{layer1_measurement} in the L3 measurement process, can be reduced according to the receiving capability of multiple receive beams. Here, a scenario where SMTC of the L3 measurement configuration conflicts with the L1 reference signal is considered for K_{layer1_measurement}, and K_{layer1_measurement} may correspond to P_{sharing factor} in the L1 measurement; and in a case where the two completely overlap, 1/3 of occasions is used for the L1 measurement (i.e., the scaling factor P_{sharing factor} = 3/1 = 3), and 2/3 of occasions is used for the L3 measurement (i.e., the scaling factor K_{layer1_measurement} = 3/2= 1.5).

In an ideal situation, the L1 measurement and the L3 measurement should not interfere with each other. That is, in the L1 measurement period of FR2, the scaling factor P no longer requires the overlapping relationship between the L1 measurement resource and SMTC, and only needs to remove the overlapping part with MG. In the L3 measurement period of FR2, the scaling factor K_{layer1_measurement} = 1.

In some embodiments, the L1 measurement includes at least one of RLM, BFD, CBD, L1-RSRP, or L1-SINR; and the L3 measurement process includes at least one of an L3 measurement within NCSG, or an L3 measurement outside a gap.

In some embodiments, N_{sim_Rx_beam_for_meas} is related to the terminal capability and/or network indication signaling of the terminal.

In summary, in the method provided in this embodiment, the terminal measures the reference signals corresponding to the L1 measurement and the L3 measurement simultaneously via multiple receive beams, and the second parameter corresponding to the measurement of the at least two receive beams is less than the second parameter corresponding to the measurement of a single receive beam, which may reduce the measurement time to a certain extent.

FIG. 9 illustrates a schematic flow chart of a capability reporting method provided by an exemplary embodiment of the present application. This embodiment is described by taking an example where the method is performed by a terminal. The method includes:
step 602, reporting, by the terminal, capability information to an access network device.

The capability information is used for indicating whether the terminal supports the capability for simultaneous reception on the same carrier via multiple receive beams.

Correspondingly, the access network device receives the capability information reported by the terminal, and the capability information is used for indicating whether the terminal supports the capability for simultaneous reception on the same carrier via the multiple receive beams.

In some embodiments, the capability information further carries at least one of:
the number of receive beams that the terminal supports for the simultaneous reception on the same carrier; or
usage method(s) of the multiple receive beams supported by the terminal.

In some embodiments, the usage method(s) of the multiple receive beams includes at least one of the following:
that all receive beams or at least two receive beams or at least one receive beam in the multiple receive beams measure the reference signal corresponding to the L1 measurement;
that all receive beams or at least two receive beams or at least one receive beam in the multiple receive beams measure the reference signal corresponding to the L3 measurement; or
that all receive beams or at least two receive beams or at least one receive beam in the multiple receive beams measure the reference signal corresponding to the L1 measurement and the reference signal corresponding to the L3 measurement simultaneously.

For example, the multiple receive beams are 8 receive beams, and the terminal uses 8 receive beams to measure the reference signal corresponding to the L1 measurement simultaneously; or the terminal uses 8 receive beams to measure the reference signal corresponding to the L3 measurement simultaneously; or the terminal uses 4 receive beams to measure the reference signal corresponding to the L1 measurement, and uses other 4 receive beams to measure the reference signal corresponding to the L3 measurement simultaneously; or the terminal uses 2 receive beams to measure the reference signal corresponding to the L1 measurement, and uses other 6 receive beams to measure the reference signal corresponding to the L3 measurement simultaneously; or the terminal uses 1 receive beam to measure the reference signal corresponding to the L1 measurement, and uses other 7 receive beams to measure the reference signal corresponding to the L3 measurement simultaneously; or the terminal uses 2 receive beams to measure the reference signal corresponding to the L1 measurement, and uses 2 receive beams to measure the reference signal corresponding to the L3 measurement simultaneously, and the remaining 4 receive beams are not used; or the terminal uses 3 receive beams to measure the reference signal corresponding to the L1 measurement, and the remaining 5 receive beams are not used; or the terminal uses 5 receive beams to measure the reference signal corresponding to the L3 measurement, and the remaining 3 receive beams are not used; or other methods are used, which are not repeated one by one.

In some embodiments, the usage method of the multiple receive beams is uniformly indicated for multiple measurement processes and/or multiple measurement types; or the usage method of the multiple receive beams is indicated for different measurement processes and/or different measurement types separately.

In some embodiments, a reporting granularity of the capability information is at least one of: each terminal; each frequency band; each carrier; each cell; or each bandwidth part (BWP).

In some embodiments, the capability information is carried in RRC signaling.

For example, the terminal may report the number of receive beams (N_{sim_Rx_beam} = {1,2,3,4}) that can be used for simultaneous reception via signaling, e.g., numSimReceptionDiffTypeD. Alternatively, the terminal may report, via signaling, e.g., SimMeasDiffTypeD or SimL3MeasDiffTypeD, that it expects/is able to use multiple receive beams for simultaneous measurement of the reference signal to speed up the Rx beam sweeping. Alternatively, the terminal may report, via signaling, e.g., numSimMeasDiffTypeD or numSimL3MeasDiffTypeD, that it expects/is able to use N_{sim_Rx_beam_for_meas} receive beams for simultaneous measurement of the reference signal to speed up the Rx beam sweeping. Alternatively, the terminal may report, via signaling, e.g., SimL1AndL3MeasDiffTypeD, that it expects/is able to use multiple receive beams for simultaneous measurement of L1 and L3. Alternatively, the terminal may report, via signaling, e.g., SimMeasAndDataDiffTypeD, that it expects/is able to use multiple receive beams for simultaneous measurement and downlink channel/signal reception. Alternatively, the terminal may report, via signaling, e.g., numSimMeasDiffTypeD, the number of receive beams that it expects/is able to use for measurement. Alternatively, the terminal may report, via signaling, e.g., numSimL3MeasDiffTypeD, numSimL1MeasDiffTypeD, and numSimDataDiffTypeD, the numbers of receive beams that it hopes/is able to use for the L3 measurement, L1 measurement, and data reception. For example, in a case where the terminal can support simultaneous measurement of up to 2 receive beams and numSimL3MeasDiffTypeD = 2, it means that the Rx beam sweeping time for the L3 measurement can be reduced by half; but since the capabilities of all receive beams are used for the L3 measurement, both the sharing factor P and K_{layer1_measurement} can only use the existing solution, and the scheduling restriction is still needed during the L3 measurement process. For another example, in a case where the terminal can support simultaneous measurement of up to 3 receive beams and numSimL3MeasDiffTypeD = 2, the L3 measurement can use 2 receive beams simultaneously, which reduces the time by half; and there is one remaining receive beam that can be used for the L1 measurement or data reception, so that the sharing factor P and K_{layer1_measurement} can be reduced, and during the L3 measurement process, the scheduling restriction for downlink reception is only needed in a case where there is the conflict with multiple PDCCHs/PDSCHs of different QCL type D.

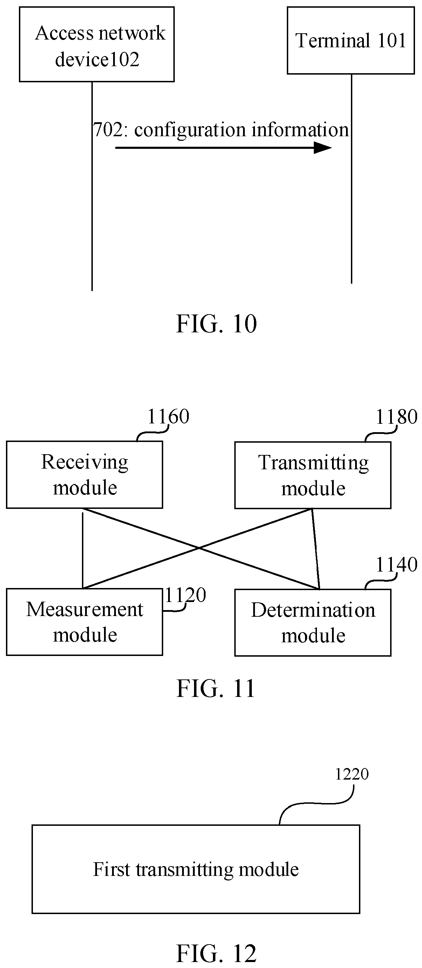

FIG. 10 illustrates a schematic flow chart of a capability reporting method provided by an exemplary embodiment of the present application. This embodiment is described by taking an example where the method is performed by a terminal. The method includes:
step 702, receiving, by the terminal, configuration information transmitted by an access network device.

Correspondingly, the access network device transmits the configuration information to the terminal, and the configuration information is used for configuring the terminal to allow simultaneous measurement on the same carrier via multiple receive beams.

In some embodiments, the usage method(s) of the multiple receive beams allowed by the configuration information include at least one of:
that all receive beams or at least two receive beams or at least one receive beam in the multiple receive beams measure the reference signal corresponding to the L1 measurement;
that all receive beams or at least two receive beams or at least one receive beam in the multiple receive beams measure the reference signal corresponding to the L3 measurement; or
that all receive beams or at least two receive beams or at least one receive beam in the multiple receive beams measure the reference signal corresponding to the L1 measurement and the reference signal corresponding to the L3 measurement.

For example, the configuration information is used for configuring whether to allow a UE to use the multiple receive beams for enhanced measurement.

For example, the configuration information is used for configuring whether to allow the UE to adopt the solution shown in FIG. 7, which includes using multiple receive beams for measurement, and using up to N_{sim_Rx_beam_for_meas} (<= N_{sim_Rx_beam}) receive beams to speed up the measurement.

For example, the configuration information is used for configuring whether to allow the UE to adopt the solution shown in FIG. 2, 3, or 5, which includes performing the L1 measurement and the L3 measurement using multiple receive beams, respectively.

For example, the configuration information is used for configuring the UE to be allowed to use some combinations of the above in a case where N_{sim_Rx_beam} is relatively large.

In some embodiments, the configuration information is related to at least one of the following conditions or information: an event during the measurement process; MG configuration; SMTC; or discontinuous reception (DRX) cycle configuration.

In some embodiments, a configuration granularity of the configuration information is at least one of: each UE; each frequency band; each carrier; each cell; or each BWP.

In some embodiments, the access network device may also indicate the usage of multiple receive beams of the terminal via signaling.

In some embodiments, the capability information is carried in RRC signaling.

For example, the access network device may configure, via a configuration parameter, e.g., numSimReceptionDiffTypeDConfig, the number of receive beams (N_{sim_Rx_beam} = {1,2,3,4}) that the terminal can use for simultaneous reception. Alternatively, the access network device may configure, via a configuration parameter, e.g., SimMeasDiffTypeDConfig or SimL3MeasDiffTypeDConfig, the terminal to be allowed/ able to use multiple receive beams for simultaneous measurement of the reference signal, so as to speed up the Rx beam sweeping. Alternatively, the access network device may configure, via a configuration parameter, e.g., numSimMeasDiffTypeDConfig or numSimL3MeasDiffTypeDConfig, the terminal to be allowed/ able to use N_{sim_Rx_beam_for_meas} receive beams for simultaneous measurement of the reference signal, so as to speed up the Rx beam sweeping. Alternatively, the access network device may configure, via a configuration parameter, e.g., SimL1AndL3MeasDiffTypeDConfig, the terminal to be allowed/ able to use multiple receive beams for simultaneous measurement of L1 and L3. Alternatively, the access network device may configure, via a configuration parameter, e.g., SimMeasAndDataDiffTypeDConfig, the terminal to be allowed/ able to use multiple receive beams for simultaneous measurement and downlink channel/signal reception. Alternatively, the access network device may configure, via a configuration parameter, e.g., numSimMeasDiffTypeDConfig, the number of receive beams that the terminal is allowed/able to use for measurement.

Alternatively, the access network device may configure, via configuration parameters, e.g., num SimL3 MeasDiffTypeDConfig, numSimL1MeasDiffTypeDConfig, and numSimDataDiffTypeDConfig, the numbers of receive beams that the terminal is allowed/able to use for the L3 measurement, L1 measurement, and data reception. For example, in a case where the terminal can support simultaneous measurement of up to 2 receive beams and numSimL3MeasDiffTypeDConfig = 2, it means that the Rx beam sweeping time for the L3 measurement can be reduced by half; but since the capabilities of all receive beams are used for the L3 measurement, both the sharing factor P and K_{layer1_measurement} can only use the existing solution, and the scheduling restriction is still needed during the L3 measurement process. For another example, in a case where the access network device can support simultaneous measurement of up to 3 receive beams and numSimL3MeasDiffTypeDConfig = 2, the L3 measurement can use 2 receive beams simultaneously, which reduces the time by half; and there is one remaining receive beam that can be used for the L1 measurement or data reception, so that the sharing factor P and K_{layer1_measurement} can be reduced, and during the L3 measurement process, the scheduling restriction for downlink reception is only needed in a case where there is the conflict with multiple PDCCHs/PDSCHs of different QCL type D.

In addition to reporting the capability information and/or receiving the configuration information to determine the usage method(s) of the multiple receive beams, in some embodiments, the terminal determines the usage method(s) of the multiple receive beams based on a first rule, and the first rule is related to at least one of the following conditions or information: an event during the measurement process; MG configuration; SMTC configuration; or DRX cycle configuration.

In some embodiments, a rule granularity of the first rule is at least one of: each terminal; each frequency band; each carrier; each cell; or each BWP.

FIG. 11 illustrates a block diagram of a measurement apparatus provided by an exemplary embodiment of the present application, and the apparatus includes:
a measurement module 1120, configured to perform measurement via at least two receive beams simultaneously.

In some embodiments, the measurement module 1120 is configured to perform at least one of the following steps:
measuring a reference signal corresponding to L1 measurement simultaneously via the at least two receive beams; or
measuring a reference signal corresponding to L3 measurement simultaneously via the at least two receive beams.

In some embodiments, the apparatus further includes:
a determination module 1140, configured to determine that a first parameter is reduced from a first value to one fraction of N_{sim_Rx_beam_for_meas} of the first value.

The first parameter is a scaling factor related to a Rx beam sweeping, N_{sim_Rx_beam_formeas} is the number of receive beams for simultaneous measurement of the at least two receive beams, and a value of N_{sim_Rx_beam_for_meas} is a positive integer.

In some embodiments, the first parameter includes at least one of:
a parameter N related to a Rx beam sweeping in the L1 measurement;
a parameter M related to the Rx beam sweeping in the L3 measurement;
a Rx beam sweeping factor N_{RxBeam} in positioning measurement;
a parameter N1 related to the Rx beam sweeping used in a process of cell selection or cell reselection in an RRC idle state; or
a parameter N1 related to the Rx beam sweeping used in a process of cell selection or cell reselection in an RRC inactive state.

In some embodiments, the L1 measurement includes at least one of:
RLM, BFD, CBD, L1-RSRP, or L1-SINR.

In some embodiments, the L3 measurement includes at least one of:
measurement within a measurement gap (MG), L3 measurement within NCSG, L3 measurement outside a gap, deactivated secondary cell measurement, RRC idle state measurement, or RRC inactive state measurement.

In some embodiments, N_{sim_Rx_beam_for_meas} is related to a terminal capability and/or network indication signaling of the terminal.

In some embodiments, the measurement module 1120 is configured to measure the reference signal corresponding to the L1 measurement and the reference signal corresponding to the L3 measurement simultaneously via the at least two receive beams.

In some embodiments, the determination module 1140 is configured to determine a second parameter corresponding to measurement of the at least two receive beams, and the second parameter corresponding to the measurement of the at least two receive beams is less than a second parameter corresponding to measurement of a single receive beam.

The second parameter is a scaling factor related to conflict between the L1 measurement and the L3 measurement.

In some embodiments, the second parameter includes at least one of:
a scaling factor P for the L1 measurement process; or
a scaling factor K_{layer1_measurement} for the L3 measurement process.

In some embodiments, the L1 measurement process includes at least one of:
RLM, BFD, CBD, L1-RSRP, or L1-SINR.

In some embodiments, the L3 measurement process includes at least one of:
L3 measurement within NCSG, or L3 measurement outside a gap.

In some embodiments, the apparatus further includes:
a transmitting module 1180, configured to report capability information, where the capability information is used for indicating whether the terminal supports a capability for simultaneous reception on the same carrier via multiple receive beams.

In some embodiments, the capability information further carries at least one of:
the number of receive beams that the terminal supports for the simultaneous reception on the same carrier; or
usage method(s) of the multiple receive beams supported by the terminal.

In some embodiments, the usage method(s) of the multiple receive beams include at least one of the following:
that all receive beams or at least two receive beams or at least one receive beam in the multiple receive beams measure a reference signal corresponding to the L1 measurement;
that all receive beams or at least two receive beams or at least one receive beam in the multiple receive beams measure a reference signal corresponding to the L3 measurement; or
that all receive beams or at least two receive beams or at least one receive beam in the multiple receive beams measure a reference signal corresponding to the L1 measurement and a reference signal corresponding to the L3 measurement simultaneously.

In some embodiments, the usage method of the multiple receive beams is uniformly indicated for multiple measurement processes; or
the usage method of the multiple receive beams is indicated for different measurement processes separately.

In some embodiments, a reporting granularity of the capability information is at least one of: each terminal; each frequency band; each carrier; each cell; or each BWP.

In some embodiments, the capability information is carried in radio resource control (RRC) signaling.

In some embodiments, the apparatus further includes:
a receiving module 1160, configured to receive configuration information, where the configuration information is used for configuring the terminal to allow simultaneous measurement on the same carrier via multiple receive beams.

In some embodiments, usage method(s) of the multiple receive beams allowed by the configuration information include at least one of the following:
that all receive beams or at least two receive beams or at least one receive beam in the multiple receive beams measure a reference signal corresponding to the L1 measurement;
that all receive beams or at least two receive beams or at least one receive beam in the multiple receive beams measure a reference signal corresponding to the L3 measurement; or
that all receive beams or at least two receive beams or at least one receive beam in the multiple receive beams measure a reference signal corresponding to the L1 measurement and a reference signal corresponding to the L3 measurement.

In some embodiments, the configuration information is related to at least one of the following conditions or information: an event during a measurement process; measurement gap (MG) configuration; synchronization signal and physical broadcast channel (PBCH) block measurement timing configuration (SMTC); or discontinuous reception (DRX) cycle configuration.

In some embodiments, a configuration granularity of the configuration information is at least one of: each UE; each frequency band; each carrier; each cell; or each BWP.

In some embodiments, the apparatus further includes:
the determination module 1140, configured to determine usage method(s) of multiple receive beams based on a first rule.

In some embodiments, the first rule is related to at least one of the following conditions or information: an event during a measurement process; MG configuration; SMTC configuration; or DRX cycle configuration.

In some embodiments, a rule granularity of the first rule is at least one of: each UE; each frequency band; each carrier; each cell; or each BWP.

FIG. 12 illustrates a block diagram of a capability reporting apparatus provided by an exemplary embodiment of the present application. The capability reporting apparatus includes:
a first transmitting module 1220, configured to report capability information, where the capability information is used for indicating whether the apparatus supports a capability for simultaneous reception on the same carrier via multiple receive beams.

In some embodiments, the capability information further carries at least one of:
the number of receive beams that the apparatus supports for the simultaneous reception on the same carrier; or
usage method(s) of the multiple receive beams supported by the apparatus.

In some embodiments, the usage method(s) of the multiple receive beams include at least one of the following:
that all receive beams or at least two receive beams or at least one receive beam in the multiple receive beams measure a reference signal corresponding to the L1 measurement;
that all receive beams or at least two receive beams or at least one receive beam in the multiple receive beams measure a reference signal corresponding to the L3 measurement; or
that all receive beams or at least two receive beams or at least one receive beam in the multiple receive beams measure a reference signal corresponding to the L1 measurement and a reference signal corresponding to the L3 measurement simultaneously.

In some embodiments, the usage method of the multiple receive beams is uniformly indicated for multiple measurement processes; or the usage method of the multiple receive beams is indicated for different measurement processes separately.

In some embodiments, a reporting granularity of the capability information is at least one of: each terminal; each frequency band; each carrier; each cell; or each BWP.

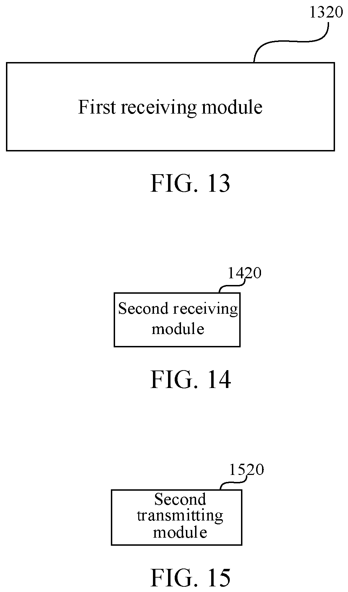

FIG. 13 illustrates a block diagram of a capability receiving apparatus provided by an exemplary embodiment of the present application. The capability receiving apparatus includes:
a first receiving module 1320, configured to receive capability information reported by a terminal, where the capability information is used for indicating whether the terminal supports a capability for simultaneous reception on the same carrier via multiple receive beams.

In some embodiments, the capability information further carries at least one of:
the number of receive beams that the apparatus supports for the simultaneous reception on the same carrier; or
usage method(s) of the multiple receive beams supported by the apparatus.

In some embodiments, the usage method(s) of the multiple receive beams include at least one of the following:
that all receive beams or at least two receive beams or at least one receive beam in the multiple receive beams measure a reference signal corresponding to the L1 measurement;
that all receive beams or at least two receive beams or at least one receive beam in the multiple receive beams measure a reference signal corresponding to the L3 measurement; or
that all receive beams or at least two receive beams or at least one receive beam in the multiple receive beams measure a reference signal corresponding to the L1 measurement and a reference signal corresponding to the L3 measurement simultaneously.

In some embodiments, the usage method of the multiple receive beams is uniformly indicated for multiple measurement processes; or the usage method of the multiple receive beams is indicated for different measurement processes separately.

In some embodiments, a reporting granularity of the capability information is at least one of: each terminal; each frequency band; each carrier; each cell; or each BWP.

FIG. 14 illustrates a block diagram of a measurement configuration apparatus provided by an exemplary embodiment of the present application. The measurement configuration apparatus includes:
a second transmitting module 1420, configured to transmit configuration information to a terminal, where the configuration information is used for configuring the terminal to allow simultaneous measurement on the same carrier via multiple receive beams.

In some embodiments, usage method(s) of the multiple receive beams allowed by the configuration information include at least one of the following:
that all receive beams or at least two receive beams or at least one receive beam in the multiple receive beams measure a reference signal corresponding to the L1 measurement;
that all receive beams or at least two receive beams or at least one receive beam in the multiple receive beams measure a reference signal corresponding to the L3 measurement; or
that all receive beams or at least two receive beams or at least one receive beam in the multiple receive beams measure a reference signal corresponding to the L1 measurement and a reference signal corresponding to the L3 measurement.

In some embodiments, the configuration information is related to at least one of the following conditions or information: an event during a measurement process; measurement gap (MG) configuration; synchronization signal and physical broadcast channel (PBCH) block measurement timing configuration (SMTC); or discontinuous reception (DRX) cycle configuration.

In some embodiments, a configuration granularity of the configuration information is at least one of: each UE; each frequency band; each carrier; each cell; or each BWP.

FIG. 15 illustrates a block diagram of a measurement configuration apparatus provided by an exemplary embodiment of the present application. The measurement configuration apparatus includes:
a second receiving module 1440, configured to receive configuration information, where the configuration information is used for configuring the apparatus to allow simultaneous measurement on the same carrier via multiple receive beams.

In some embodiments, usage method(s) of the multiple receive beams allowed by the configuration information include at least one of the following:
that all receive beams or at least two receive beams or at least one receive beam in the multiple receive beams measure a reference signal corresponding to the L1 measurement;
that all receive beams or at least two receive beams or at least one receive beam in the multiple receive beams measure a reference signal corresponding to the L3 measurement; or
that all receive beams or at least two receive beams or at least one receive beam in the multiple receive beams measure a reference signal corresponding to the L1 measurement and a reference signal corresponding to the L3 measurement.

In some embodiments, the configuration information is related to at least one of the following conditions or information: an event during a measurement process; measurement gap (MG) configuration; synchronization signal and physical broadcast channel (PBCH) block measurement timing configuration (SMTC); or discontinuous reception (DRX) cycle configuration.

In some embodiments, a configuration granularity of the configuration information is at least one of: each UE; each frequency band; each carrier; each cell; or each BWP.

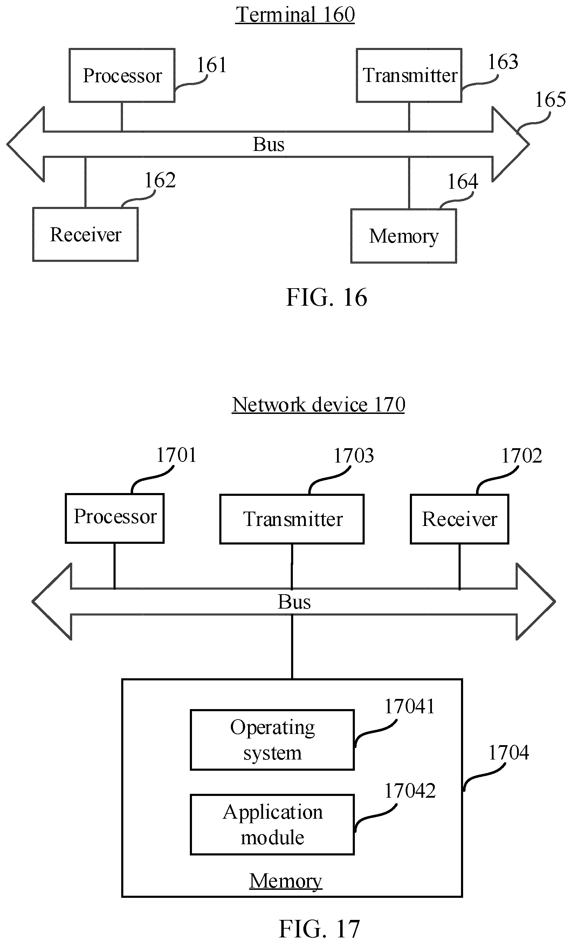

FIG. 16 illustrates a schematic diagram of a structure of a terminal provided by an exemplary embodiment of the present application. The terminal includes: a processor 161, a receiver 162, a transmitter 163, a memory 164 and a bus 165.

The processor 161 includes one or more processing cores. The processor 161 executes various functional applications and performs information processing by running software programs and modules.

The receiver 162 and the transmitter 163 may be implemented as a communication component, which may be a communication chip.

The memory 164 is connected to the processor 161 via the bus 165.

The memory 164 may be used to store at least one instruction, and the processor 161 may be used to execute the at least one instruction to implement the steps in the above method embodiments.

In addition, the memory 164 may be implemented by any volatile or non-volatile storage device or a combination thereof. The volatile or non-volatile storage devices include, but are not limited to: a magnetic disk or an optical disk, an electrically erasable programmable read only memory (EEPROM), an erasable programmable read only memory (EPROM), a static random-access memory (SRAM), a read only memory (ROM), a magnetic memory, a flash memory, and a programmable read only memory (PROM).

In an exemplary embodiment, a non-transitory readable storage medium including instructions (e.g., memory including instructions) is further provided, and the above instructions can be executed by a processor of a terminal to complete the beam determination method of the backhaul link. For example, the non-transitory readable storage medium may be a ROM, a random-access memory (RAM), a compact disc read only memory (CD-ROM), a magnetic tape, a floppy disk, an optical data storage device, or the like.

FIG. 17 illustrates a block diagram of a network device or access network device 170 provided by an exemplary embodiment of the present application. The access network device 170 may be a base station.

The network device or access network device 170 may include: a processor 171, a receiver 172, a transmitter 173 and a memory 174. The receiver 172, the transmitter 173 and the memory 174 are connected to the processor 171 via a bus.

The processor 171 includes one or more processing cores, and the processor 171 executes the beam determination method of the backhaul link provided in the embodiments of the present disclosure by running software programs and modules. The memory 174 may be used to store the software programs and modules. Specifically, the memory 174 may store an operating system 1741 and an application module 1742 required for at least one function. The receiver 172 is used to receive communication data transmitted by other devices, and the transmitter 173 is used to transmit communication data to other devices.

An exemplary embodiment of the present application further provides a computer-readable storage medium. At least one program is stored in the computer-readable storage medium, and the at least one program is loaded and executed by a processor to implement at least one of the measurement method, the capability reporting method, the capability receiving method, or the measurement configuration method provided in the above-mentioned various method embodiments.

An exemplary embodiment of the present application further provides a computer program product. The computer program product includes at least one program, and the at least one program is stored in a readable storage medium; a processor of a communication device reads signaling from the readable storage medium, and the processor executes the signaling to enable the communication device to implement at least one of the measurement method, the capability reporting method, the capability receiving method, or the measurement configuration method provided in the above-mentioned various method embodiments.

An exemplary embodiment of the present application further provides a computer program. The computer program includes at least one program, and the at least one program is stored in a readable storage medium; a processor of a communication device reads signaling from the readable storage medium, and the processor executes the signaling to enable the communication device to implement at least one of the measurement method, the capability reporting method, the capability receiving method, or the measurement configuration method provided in the above-mentioned various method embodiments.

It should be understood that the "multiple" mentioned herein refers to two or more than two. Other implementations of the present application will be readily obtained by those skilled in the art after considering the specification and practicing the invention disclosed herein. The present application is intended to cover any variations, uses or adaptive changes of the present application, which follow the general principles of the present application and include common knowledges or customary technical means in this technical field that are not disclosed in the present application. The specification and embodiments are considered as exemplary only, and the true scope and spirit of the present application are indicated by the following claims.

It should be understood that, the present application is not limited to the precise structures that have been described above and shown in the accompanying drawings, and various modifications and changes may be made without departing from the scope thereof. The scope of the present application is limited only by the appended claims.

## Claims

1. A measurement method, wherein the method is performed by a terminal, and the method comprises:
performing measurement via at least two receive beams simultaneously.

2. The method according to claim 1, wherein performing the measurement via the at least two receive beams simultaneously comprises at least one of:
measuring a reference signal corresponding to L1 measurement simultaneously via the at least two receive beams; or
measuring a reference signal corresponding to L3 measurement simultaneously via the at least two receive beams.

3. The method according to claim 2, wherein the method further comprises:
determining that a first parameter is reduced from a first value to one fraction of N_{sim_Rx_beam_for_meas} of the first value, wherein
the first parameter is a scaling factor related to receive beam sweeping, N_{sim_Rx_beam_for_meas} is a number of receive beams for simultaneous measurement of the at least two receive beams, and a value of N_{sim_Rx_beam_for_meas} is a positive integer.

4. The method according to claim 3, wherein the first parameter comprises at least one of:
a parameter N related to the receive beam sweeping in the L1 measurement;
a parameter M related to the receive beam sweeping in the L3 measurement;
a receive beam sweeping factor N_{RxBeam} in positioning measurement;
a parameter N1 related to the receive beam sweeping used in a process of cell selection or cell reselection in a radio resource control (RRC) idle state; or
a parameter N1 related to the receive beam sweeping used in a process of cell selection or cell reselection in an RRC inactive state.

5. The method according to claim 4, wherein the L1 measurement comprises at least one of:
a radio link monitoring (RLM), a beam failure detection (BFD), a candidate beam detection (CBD), a layer 1 reference signal received power (L1-RSRP), or a layer 1 signal-to-interference-and-noise ratio (L1-SINR).

6. The method according to claim 4, wherein the L3 measurement comprises at least one of:
measurement within a measurement gap (MG), L3 measurement within a network controlled small gap (NCSG), L3 measurement outside a gap, deactivated secondary cell measurement, RRC idle state measurement, or RRC inactive state measurement.

7. The method according to any one of claims 2 to 6, wherein N_{sim_Rx_beam_for_meas} is related to a terminal capability and/or network indication signaling of the terminal.

8. The method according to any one of claims 1 to 7, wherein performing the measurement via the at least two receive beams simultaneously comprises:
measuring a reference signal corresponding to L1 measurement and a reference signal corresponding to L3 measurement simultaneously via the at least two receive beams.

9. The method according to claim 8, wherein the method further comprises:
determining a second parameter corresponding to measurement of the at least two receive beams, and the second parameter corresponding to the measurement of the at least two receive beams is less than a second parameter corresponding to measurement of a single receive beam;
wherein the second parameter is a scaling factor related to conflict between the L1 measurement and the L3 measurement.

10. The method according to claim 9, wherein the second parameter comprises at least one of:
a scaling factor P for the L1 measurement; or
a scaling factor K_{layer1+_measurement} for the L3 measurement.

11. The method according to claim 10, wherein the L1 measurement comprises at least one of:
a RLM, a BFD, a CBD, an L1-RSRP, or an L1-SINR.

12. The method according to claim 10, wherein the L3 measurement comprises at least one of:
L3 measurement within a NCSG, or L3 measurement outside a gap.

13. The method according to any one of claims 1 to 12, wherein the method further comprises:
reporting capability information, wherein the capability information is used for indicating whether the terminal supports a capability for simultaneous reception on a same carrier via multiple receive beams.

14. The method according to claim 13, wherein the capability information further carries at least one of:
a number of receive beams that the terminal supports for the simultaneous reception on the same carrier; or
a usage method of the multiple receive beams supported by the terminal.

15. The method according to claim 14, wherein the usage method of the multiple receive beams comprises at least one of the following:
that all receive beams or at least two receive beams or at least one receive beam in the multiple receive beams measure a reference signal corresponding to an L1 measurement;
that all receive beams or at least two receive beams or at least one receive beam in the multiple receive beams measure a reference signal corresponding to an L3 measurement; or
that all receive beams or at least two receive beams or at least one receive beam in the multiple receive beams measure the reference signal corresponding to the L1 measurement and the reference signal corresponding to the L3 measurement simultaneously.

16. The method according to claim 14, wherein
the usage method of the multiple receive beams is uniformly indicated for multiple measurement processes; or
the usage method of the multiple receive beams is indicated for different measurement processes separately.

17. The method according to any one of claims 13 to 16, wherein a reporting granularity of the capability information is at least one of:
each terminal;
each frequency band;
each carrier;
each cell; or
each bandwidth part (BWP).

18. The method according to claim 13, wherein the capability information is carried in radio resource control (RRC) signaling.

19. The method according to any one of claims 1 to 18, wherein the method further comprises:
receiving configuration information, wherein the configuration information is used for configuring the terminal to allow simultaneous measurement on a same carrier via multiple receive beams.

20. The method according to claim 19, wherein a usage method of the multiple receive beams allowed by the configuration information comprises at least one of the following:
that all receive beams or at least two receive beams or at least one receive beam in the multiple receive beams measure a reference signal corresponding to an L1 measurement;
that all receive beams or at least two receive beams or at least one receive beam in the multiple receive beams measure a reference signal corresponding to an L3 measurement; or
that all receive beams or at least two receive beams or at least one receive beam in the multiple receive beams measure the reference signal corresponding to the L1 measurement and the reference signal corresponding to the L3 measurement.

21. The method according to claim 20, wherein the configuration information is related to at least one of the following conditions or information:
an event during a measurement process;
measurement gap (MG) configuration;
synchronization signal and physical broadcast channel (PBCH) block measurement timing configuration (SMTC); or
discontinuous reception (DRX) cycle configuration.

22. The method according to any one of claims 19 to 21, wherein a configuration granularity of the configuration information is at least one of:
each UE;
each frequency band;
each carrier;
each cell; or
each BWP.

23. The method according to any one of claims 1 to 22, wherein the method further comprises:
determining a usage method of multiple receive beams based on a first rule.

24. The method according to claim 23, wherein the first rule is related to at least one of the following conditions or information:
an event during a measurement process;
MG configuration;
SMTC configuration; or
DRX cycle configuration.

25. The method according to claim 23, wherein a rule granularity of the first rule is at least one of:
each UE;
each frequency band;
each carrier;
each cell; or
each BWP.

26. A capability reporting method, wherein the method is performed by a terminal, and the method comprises:
reporting capability information, wherein the capability information is used for indicating whether the terminal supports a capability for simultaneous reception on a same carrier via multiple receive beams.

27. The method according to claim 26, wherein the capability information further carries at least one of:
a number of receive beams that the terminal supports for the simultaneous reception on the same carrier; or
a usage method of the multiple receive beams supported by the terminal.

28. The method according to claim 27, wherein the usage method of the multiple receive beams comprises at least one of the following:
that all receive beams or at least two receive beams or at least one receive beam in the multiple receive beams measure a reference signal corresponding to an L1 measurement;
that all receive beams or at least two receive beams or at least one receive beam in the multiple receive beams measure a reference signal corresponding to an L3 measurement; or
that all receive beams or at least two receive beams or at least one receive beam in the multiple receive beams measure the reference signal corresponding to the L1 measurement and the reference signal corresponding to the L3 measurement simultaneously.

29. The method according to claim 28, wherein
the usage method of the multiple receive beams is uniformly indicated for multiple measurement processes; or
the usage method of the multiple receive beams is indicated for different measurement processes separately.

30. The method according to any one of claims 26 to 29, wherein a reporting granularity of the capability information is at least one of:
each terminal;
each frequency band;
each carrier;
each cell; or
each bandwidth part (BWP).

31. The method according to claim 30, wherein the capability information is carried in radio resource control (RRC) signaling.

32. A capability receiving method, wherein the method is performed by a network device, and the method comprises:
receiving capability information reported by a terminal, wherein the capability information is used for indicating whether the terminal supports a capability for simultaneous reception on a same carrier via multiple receive beams.

33. The method according to claim 32, wherein the capability information further carries at least one of:
a number of receive beams that the terminal supports for the simultaneous reception on the same carrier; or
a usage method of the multiple receive beams supported by the terminal.

34. The method according to claim 33, wherein the usage method of the multiple receive beams comprises at least one of the following:
that all receive beams or at least two receive beams or at least one receive beam in the multiple receive beams measure a reference signal corresponding to an L1 measurement;
that all receive beams or at least two receive beams or at least one receive beam in the multiple receive beams measure a reference signal corresponding to an L3 measurement; or
that all receive beams or at least two receive beams or at least one receive beam in the multiple receive beams measure the reference signal corresponding to the L1 measurement and the reference signal corresponding to the L3 measurement simultaneously.

35. The method according to claim 34, wherein
the usage method of the multiple receive beams is uniformly indicated for multiple measurement processes; or
the usage method of the multiple receive beams is indicated for different measurement processes separately.

36. The method according to any one of claims 32 to 35, wherein a reporting granularity of the capability information is at least one of:
each terminal;
each frequency band;
each carrier;
each cell; or
each bandwidth part (BWP).

37. The method according to claim 36, wherein the capability information is carried in radio resource control (RRC) signaling.

38. A measurement configuration method, wherein the method is performed by a network device, and the method comprises:
transmitting configuration information to a terminal, wherein the configuration information is used for configuring the terminal to allow simultaneous measurement on a same carrier via multiple receive beams.

39. The method according to claim 38, wherein a usage method of the multiple receive beams allowed by the configuration information comprises at least one of the following:
that all receive beams or at least two receive beams or at least one receive beam in the multiple receive beams measure a reference signal corresponding to an L1 measurement;
that all receive beams or at least two receive beams or at least one receive beam in the multiple receive beams measure a reference signal corresponding to an L3 measurement; or
that all receive beams or at least two receive beams or at least one receive beam in the multiple receive beams measure the reference signal corresponding to the L1 measurement and the reference signal corresponding to the L3 measurement.

40. The method according to claim 39, wherein the configuration information is related to at least one of the following conditions or information:
an event during a measurement process;
measurement gap (MG) configuration;
synchronization signal and physical broadcast channel (PBCH) block measurement timing configuration (SMTC); or
discontinuous reception (DRX) cycle configuration.

41. The method according to any one of claims 38 to 40, wherein a configuration granularity of the configuration information is at least one of:
each UE;
each frequency band;
each carrier;
each cell; or
each BWP.

42. A measurement configuration method, wherein the method is performed by a terminal, and the method comprises:
receiving configuration information transmitted by a network device, wherein the configuration information is used for configuring the terminal to allow simultaneous measurement on a same carrier via multiple receive beams.

43. The method according to claim 42, wherein a usage method of the multiple receive beams allowed by the configuration information comprises at least one of the following:
that all receive beams or at least two receive beams or at least one receive beam in the multiple receive beams measure a reference signal corresponding to an L1 measurement;
that all receive beams or at least two receive beams or at least one receive beam in the multiple receive beams measure a reference signal corresponding to an L3 measurement; or
that all receive beams or at least two receive beams or at least one receive beam in the multiple receive beams measure the reference signal corresponding to the L1 measurement and the reference signal corresponding to the L3 measurement.

44. The method according to claim 43, wherein the configuration information is related to at least one of the following conditions or information:
an event during a measurement process;
measurement gap (MG) configuration;
synchronization signal and physical broadcast channel (PBCH) block measurement timing configuration (SMTC); or
discontinuous reception (DRX) cycle configuration.

45. The method according to any one of claims 42 to 44, wherein a configuration granularity of the configuration information is at least one of:
each UE;
each frequency band;
each carrier;
each cell; or
each BWP.

46. A measurement apparatus, wherein the apparatus comprises:
a measuring module, configured to perform measurement via at least two receive beams simultaneously.

47. A capability reporting apparatus, wherein the apparatus comprises:
a first transmitting module, configured to report capability information, wherein the capability information is used for indicating whether a terminal supports a capability for simultaneous reception on a same carrier via multiple receive beams.

48. A capability receiving apparatus, wherein the apparatus comprises:
a first receiving module, configured to receive capability information reported by a terminal, wherein the capability information is used for indicating whether the terminal supports a capability for simultaneous reception on a same carrier via multiple receive beams.

49. A measurement configuration apparatus, wherein the apparatus comprises:
a second transmitting module, configured to transmit configuration information to a terminal, wherein the configuration information is used for configuring the terminal to allow simultaneous measurement on a same carrier via multiple receive beams.

50. A measurement configuration apparatus, wherein the apparatus comprises:
a second receiving module, configured to receive configuration information, wherein the configuration information is used for configuring the apparatus to allow simultaneous measurement on a same carrier via multiple receive beams.

51. A terminal, wherein the terminal comprises:
a processor; and
a transceiver connected to the processor;
wherein the processor is configured to load and execute executable instructions to implement the measurement method according to any one of claims 1 to 25, or to implement the capability reporting method according to any one of claims 26 to 31, or to implement the measurement configuration method according to any one of claims 42 to 45.

52. A network device, wherein the network device comprises:
a processor; and
a transceiver connected to the processor;
wherein the processor is configured to load and execute executable instructions to implement the capability receiving method according to any one of claims 32 to 37, or to implement the measurement configuration method according to any one of claims 38 to 41.

53. A chip, wherein the chip comprises a programmable logic circuit and/or program instructions, and a communication device equipped with the chip operates to implement the measurement method according to any one of claims 1 to 25, or to implement the capability reporting method according to any one of claims 26 to 31, or to implement the capability receiving method according to any one of claims 32 to 37, or to implement the measurement configuration method according to any one of claims 38 to 45.

54. A computer-readable storage medium, wherein at least one program is stored in the readable storage medium, and the at least one program is loaded and executed by a processor to implement the measurement method according to any one of claims 1 to 25, or to implement the capability reporting method according to any one of claims 26 to 31, or to implement the capability receiving method according to any one of claims 32 to 37, or to implement the measurement configuration method according to any one of claims 38 to 45.

55. A computer program product, wherein the computer program product comprises at least one program, and the at least one program is stored in a computer-readable storage medium; a processor of a communication device reads the at least one program from the computer-readable storage medium, and the processor executes the at least one program to enable the communication device to perform the measurement method according to any one of claims 1 to 25, or to perform the capability reporting method according to any one of claims 26 to 31, or to perform the capability receiving method according to any one of claims 32 to 37, or to perform the measurement configuration method according to any one of claims 38 to 45.

56. A computer program, wherein the computer program comprises at least one program, and the at least one program is stored in a computer-readable storage medium; a processor of a communication device reads the at least one program from the computer-readable storage medium, and the processor executes the at least one program to enable the communication device to perform the measurement method according to any one of claims 1 to 25, or to perform the capability reporting method according to any one of claims 26 to 31, or to perform the capability receiving method according to any one of claims 32 to 37, or to perform the measurement configuration method according to any one of claims 38 to 45.
